# EUROPÄISCHE PATENTSCHRIFT

(11) **EP 0 776 077 B1**
(45) Veröffentlichungstag und Bekanntmachung des Hinweises auf die Patenterteilung: **20.09.2000**
(21) Anmeldenummer: 96118075.9
(22) Anmeldetag: 12.11.1996
(51) Int. Cl.: H02B 1/052

(54) **Vorrichtung zum Befestigen von Zusatzeinrichtungen an Hutschienen**
Device for mounting of accessories on DIN rails
Dispositif pour le montage d'accessoires sur des rails DIN

(30) Priorität: 27.11.1995 DE 19544083
(43) Veröffentlichungstag der Anmeldung: 28.05.1997
(73) Patentinhaber: Rittal-Werk Rudolf Loh GmbH & Co. KG, 35745 Herborn (DE)
(72) Erfinder: Zachrai, Jürgen, 35690 Dillenburg (DE)
(74) Vertreter: Fleck, Hermann-Josef, Dr.-Ing.

(56) Entgegenhaltungen:
- EP-A- 0 115 239
- DE-A- 2 610 119
- DE-A- 3 025 129
- DE-B- 1 138 136
- DE-B- 1 143 563
- DE-B- 1 143 886
- DE-U- 7 603 949
- DE-U- 7 725 258
- FR-A- 2 101 984

## Beschreibung

Die Erfindung betrifft eine Vorrichtung zum Befestigen von Zusatzeinrichtungen, wie Kabelkanäle, Kleingehäuse, Montageplatten und dgl. an U-förmigen Hutschienen gemäß Norm DIN EN 50 022 mit an den Seitenschenkeln nach außen abgekanteten Raststegen und einer auf die Breite der Hutschienen abgestimmten Befestigungsplatte aus Stahlblech aufweist, an der den Raststegen der Hutschiene zugekehrten Seiten jeweils mindestens zwei Rastfedern abgeteilt und abgebogen sind.

Eine solche Vorrichtung aus der DE 76 03 949 U1 bekannt. Hierbei ist eine Befestigungsplatte aneinander gegenüber liegenden und den Raststegen der Hutschiene zugekehrten Rändern mit Rastfedern versehen. Die Rastfedern dienen zur Verrastung mit den Raststegen. Die Befestigungsplatte ist mit vier Befestigungsaufnahmen versehen, die jeweils den vier Befestigungsplatten-Rändern zugeordnet sind. Durch die Befestigungsaufnahmen können Befestigungsschrauben hindurch geschoben und in Gewindeaufnahmen eines Installationsgerätes eingeschraubt werden. Die Einheit,

bestehend aus Befestigungsplatte und Installationsgeräte, kann auf die Hutschiene in der vorstehend erwähnten Weise aufgerastet werden. Es hat sich als nachteilig bei dieser Anordnung ergeben, dass das Installationsgerät stets zuerst mit der Befestigungsplatte verbunden werden muss, bevor es auf die Hutschiene aufgerastet wird. Mithin ist es nicht möglich, an einer bereits aufgerasteten Befestigungsplatte ein Installationsgerät anzubringen. Desweiteren eignet sich die bekannte Vorrichtung auch nicht zur Aufnahme schwerer Anbauten. Die Befestigungsplatte muss eine gewisse Elastizität aufweisen, damit die Funktionsweise der Rastfedern sichergestellt werden kann. Es muss daher ein verhältnismäßig dünnes Stahlblech für die Befestigungsplatte verwendet werden. Diese biegt sich aber bei der Anbringung großer Lasten, so dass die sichere Befestigung nicht mehr gewährleistet ist.

Die DE 77 25 258 U1 offenbart eine Befestigungsvorrichtung, mit der Kabelkanäle auf einer Hutschiene befestigt werden können. Die Befestigungsvorrichtung besteht aus Kunststoff und weist vier an einer Befestigungsplatte angeformte Rasthaken auf. Die Rasthaken dienen zur Verrastung mit den Raststegen einer Hutschiene. Die Befestigungsplatte weist eine zentrische Bohrung auf, zu der eine Befestigungsaufnahme des anzubauenden Kabelkanals fluchtend aus gerichtet werden kann. Die Befestigungsplatte und der Kabelkanal können in der zentrischen Bohrung und der Befestigungsaufnahme miteinander vernietet werden. Die aus Kunststoff bestehende Befestigungsplatte ist zur Anbringung hoher Lasten (beispielsweise von Leistungsschaltern, etc.) nicht ausreichend stabil.

Es ist Aufgabe der Erfindung, unter Verwendung der an sich bekannten und genormten Hutschienen eine Vorrichtung zum Befestigen von Zusatzeinrichtungen, wie Kabelkanäle, Kleingehäuse, Montageplatten und dgl., zu schaffen, die zum Ausbau von Schaltschränken universell einsetzbar ist und zur Anbringung von hohen Lasten eine ausreichende Stabilität aufweist.

Diese Aufgabe wird nach der Erfindung dadurch gelöst, dass die Befestigungsplatte mit Gewindebohrungen versehen ist, von denen eine im Zentrum der Befestigungsplatte angeordnet ist, und dass die Befestigungsplatte außerhalb der Rastfedern mit abgekanteten Rändern versteift ist.

Die Gewindebohrungen der Befestigungsplatte bieten die Möglichkeit, die unterschiedlichsten Zusatzeinrichtungen daran festzuschrauben, wobei dies auch an auf einer Hutschiene bereits festgelegten Befestigungsplatten ausgeführt werden kann. Die Zusatzeinrichtung kann jedoch auch schon vor dem Aufrasten der Befestigungsplatten der Hutschiene mit den Befestigungsplatten verbunden sein. Die Verwendung der zentrischen Gewindebohrung bietet dabei den Vorteil, daß die Befestigungsschraube zwischen den Seitenschenkeln der Hutschiene ausreichend Raum vorfindet und aus der Gewindebohrung in die Hutschiene hineinragen kann. Dadurch, dass die Befestigungsplatte außerhalb der Rastfedern mit abgekanteten Rändern versteift ist, erhält diese auch außerhalb der Rastfedern eine ausreichende Stabilität, auch dann, wenn aus Elastizitätsgründen ein verhältnismäßig dünnes Stahlblech als Ausgangsmaterial verwendet wird.

Nach einer einfachen Ausgestaltung ist vorgesehen, daß sich die Befestigungsplatte über einen Abschnitt der Hutschiene erstreckt, der mindestens der Breite der Hutschiene entspricht. Derartige Befestigungsplatten reichen in der Regel aus und können auch für eine Zusatzeinrichtung mehrfach verwendet werden.

Das Aufrasten der Befestigungsplatte auf die Hutschiene wird dadurch erleichtert, daß die Rastfedern im wesentlichen S-förmig ausgebildet sind und mit Endabschnitten enden, deren konkave Seiten der Hutschiene abgekehrt sind.

Eine ausreichende Elastizität für die Rastfedern wird nach einer Ausgestaltung dadurch erreicht, daß die Rastfedern mittels Schlitzen an der Befestigungsplatte abgeteilt sind, die sich über einen Teilbereich der Ränder der Befestigungsplatte erstrecken.

Die Verbindungsmöglichkeiten zwischen der Zusatzeinrichtung und der Befestigungsplatte werden dadurch erhöht, daß die Gewindebohrungen gleichmäßig in der Befestigungsplatte verteilt eingebracht sind. Dabei kann zur Variation der Befestigungsmöglichkeiten noch vorgesehen sein, daß die um die zentrische Gewindebohrung angeordneten Gewindebohrung angeordneten Gewindebohrungen im Durchmesser vom Durchmesser der zentrischen Gewindebohrung abweicht und vorzugsweise kleiner sind.

Die Erfindung wird anhand von in den Zeichnungen dargestellten Ausführungsbeispielen näher erläutert. Es zeigen jeweils in perspektivischer Darstellung:
Fig. 1 die Befestigung einer zweiten Hutschiene an einer Hutschiene,
Fig. 2 die Befestigung einer Montageplatte an einer Hutschiene,
Fig. 3 die Befestigung eines Kleingehäuses an zwei Hutschienen und
Fig. 4 die Befestigung von Kabelkanälen an einer Hutschiene.

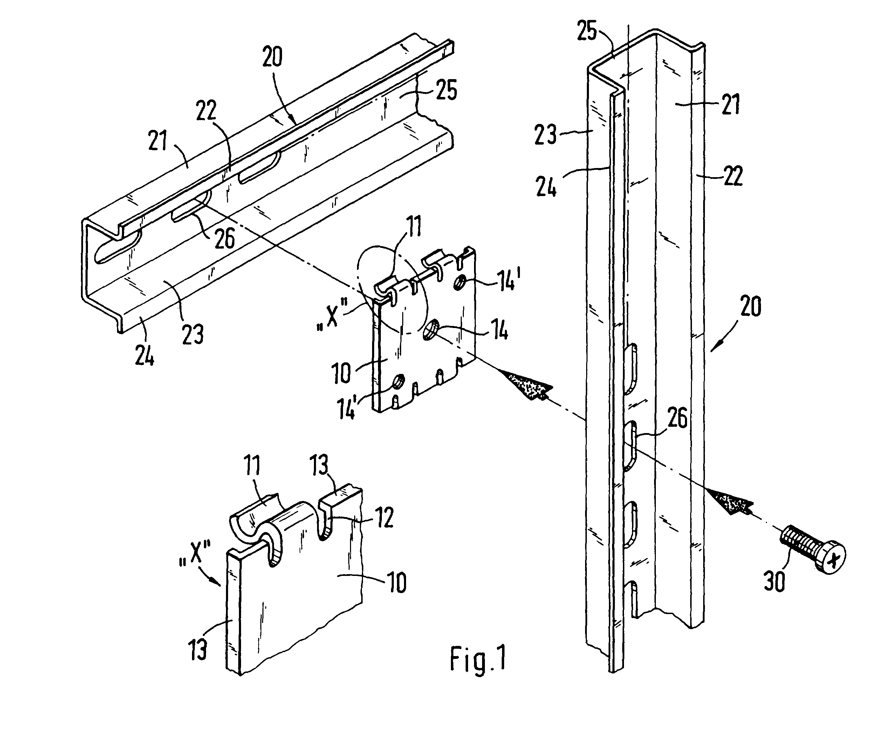

Bei allen in den Fig. 1 bis 4 gezeigten Befestigungsarten wird als Verbindungselement zum Rahmengestell, zu einer Montageschiene und dgl. des Schaltschrankes eine genormte Hutschiene 20 verwendet, die mit ihren Seitenschenkeln 21 uns 23 mit nach außen gerichteten Raststegen 22 und 24 über ihre gesamte Länge Aufrastmöglichkeiten bietet. Im Basisschenkel 25 ist eine Reihe von als Langlöcher ausgebildeter Befestigungsaufnahmen 26 eingebracht, so daß die Hutschiene 20 leicht angeschraubt werden kann.

Als Zwischenelement für die Anbringung von Zusatzeinrichtungen wird eine speziell ausgebildete Befestigungsplatte 10 verwendet, die einfach an beliebiger Stelle auf die Hutschiene 20 aufgerastet und darauf festgelegt werden kann. Die Befestigungsplatte 10 ist in der Breite auf die Breite der Hutschiene 20 abgestimmt und erstreckt sich über einen Abschnitt der Länge der Hutschiene 20, der mindestens der Breite der Hutschiene 20 entspricht.

An den den Raststegen 22 und 24 der Hutschiene 20 zugekehrten Seiten der Befestigungsplatte 10 sind jeweils mindestens zwei Rastfedern 11 abgeteilt und abgebogen. Dabei erstrecken sich die Schlitze 12 über einen Teilbereich der Ränder der Befestigungsplatte 10, um für die Rastfedern 11 eine ausreichende Elastizität zu erhalten. Die Befestigungsplatte wird aus Stahlblech als Ausgangsmaterial hergestellt und mit Gewindebohrungen 14 und 14' versehen. Die Gewindebohrung 14 ist dabei im Zentrum der Befestigungsplatte 10 eingebracht, damit die eingeschraubte Befestigungsschraube 30 zwischen den Seitenschenkeln 21 und 23 in die Hutschiene 20 hineinragen kann. Die übrigen Gewindebohrungen 14' sind gleichmäßig über die Befestigungsplatte 10 verteilt und können kleineren Durchmesser aufweisen.

Die Rastfedern 11 sind im wesentlichen S-förmig ausgebildet und enden mit Endabschnitten, deren konkave Seiten den Seitenschenkeln 21 und 23 der Hutschiene 20 abgekehrt sind, so daß die Befestigungsplatte 10 leicht auf die Raststege 22 und 24 aufgerastet werden kann. Die konvexen Seiten der Endabschnitte der Rastfedern 11 gleiten dabei unter Auslenkung der Rastfedern 11 über die Raststege 22 und 24 und rasten hinter diesen ein.

Mit der Befestigungsschraube 30 wird eine zweite Hutschiene 20 an der Befestigungsplatte 10 festgeschraubt, wobei ein Langloch 26 in dem Basisschenkel 25 der zweiten Hutschiene 20 und die zentrische Gewindebohrung 14 belegt werden, wie in Fig. 1 gezeigt ist. Damit läßt sich auf einfache Weise eine zweite Hutschiene 20 mit der als Basis der Vorrichtung verwendeten Hutschiene 20 festlegen.

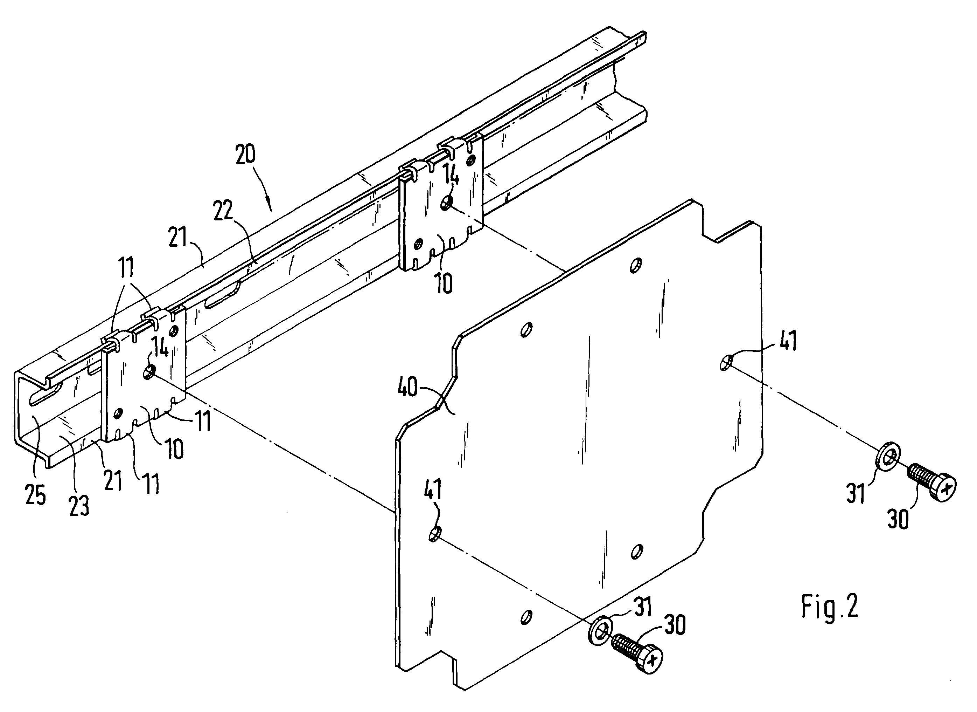

Wie Fig. 2 zeigt, kann mittels zweier Befestigungsplatten 10 eine Montageplatte 40 an einer Hutschiene 20 befestigt werden. Die Montageplatte 40 ist mit Befestigungsbohrungen 41 versehen, die über zwei Befestigungsschrauben 30 und Beilagscheiben 31 mit zwei Befestigungsplatten 10 verbunden wird, wobei ebenfalls deren zentrische Gewindebohrung 14 verwendet werden. Die Befestigung kann dabei schon vor dem Aufrasten der Befestigungsplatten 10 auf die Hutschiene 20 erfolgen oder auch erst nachdem die Befestigungsplatten 10 auf die Hutschiene 20 aufgerastet und in die Befestigungsposition verschoben sind.

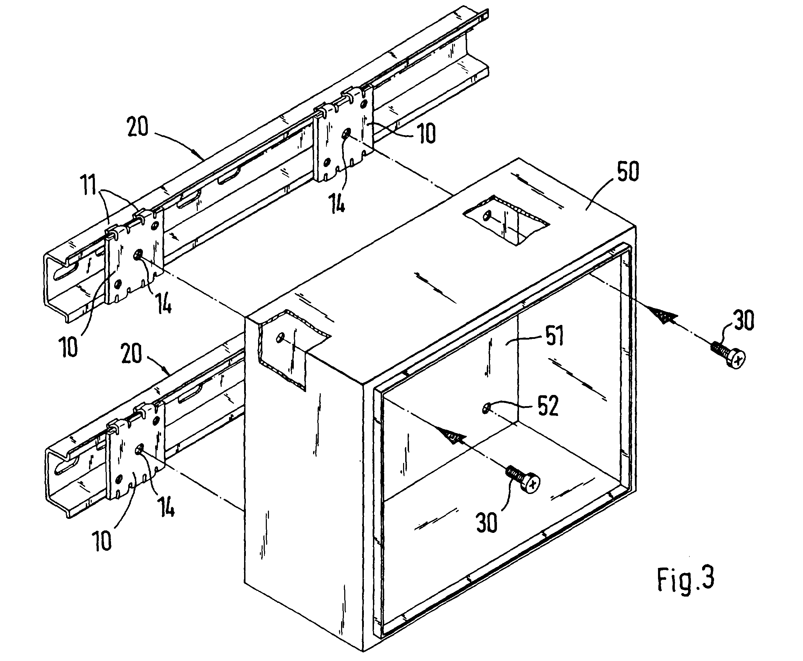

Ist ein Kleingehäuse 50 im Bereich des Gehäusebodens 51 mit vier im Rechteck angeordneten Befestigungsbohrungen 52 versehen, dann kann es mittels vier Befestigungsplatten 10 an zwei parallel zueinander angeordneten Hutschienen 20 befestigt werden, wie Fig. 3 zeigt.

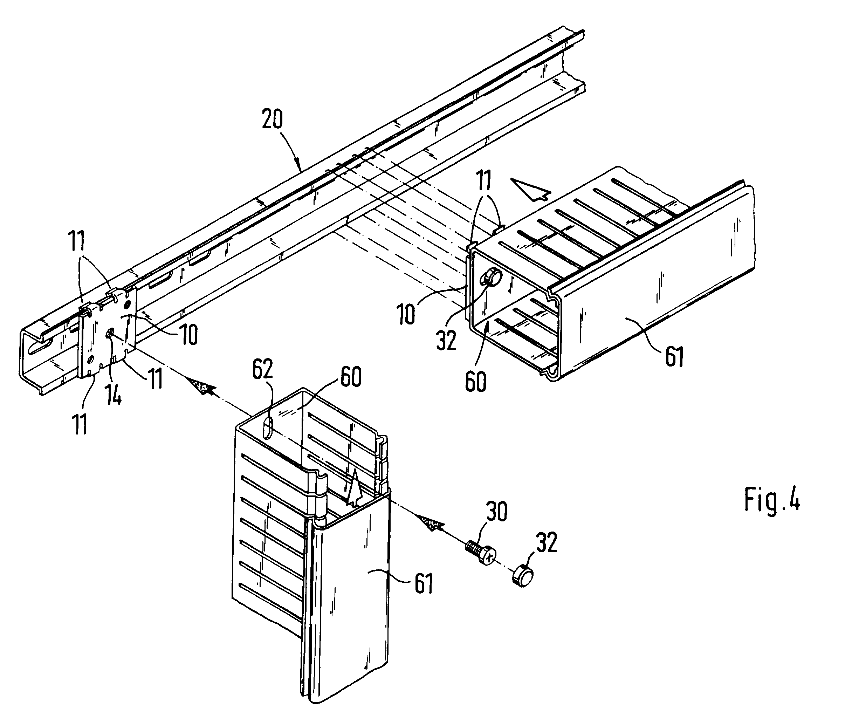

Wie Fig. 4 zeigt, können mit den erfindungsgemäßen Befestigungsplatten 10 auch U-förmige Kabelkanäle 60 an einer Hutschiene 20 befestigt werden. Dabei kann der Kabelkanal 60 in Längsrichtung der Hutschiene 20 über mehrere Befestigungsplatten 10 festgelegt werden oder der Kabelknal 60 kann mit einer Befestigungsplatte 10 senkrecht zur Längsrichtung der Hutschiene 20 an dieser angebracht werden. Die Kabelkanäle 60 können dabei schon die Befestigungsplatten 10 tragen, wobei die Köpfe der Befestigungsschrauben 30 mit Isolierkappen 32 abgedeckt sind.

Der Kabelkanal 60 kann aber auch mit einer auf der Hutschiene 20 aufgerasteten und festgelegten Befestigungsplatte 10 verbunden werden. Der Kopf der Befestigungsschraube 30 wird dann nach dem Herstellen der Verbindung mit der Isolierkappe 32 abgedeckt. Die Kabelkanäle 60 werden mit Rastdeckeln 61 verschlossen. Im Boden der Kabelkanäle 60 sind die für die Durchführung der Befestigungsschrauben 30 nötigen Befestigungsaufnahmen 62 eingebracht. Belegt werden in den Befestigungsplatten 10 vorzugsweise die zentrischen Gewindebohrungen 14.

Die Befestigungspatten 10 können seitlich auch mehr als zwei Rastfedern 11 tragen und sich über größere Abschnitte der Länge der Hutschiene 20 erstrecken und für die Befestigung andersartiger Zusatzeinrichtungen verwendet werden.

Wie Fig. 1 zeigt, kann zur Herstellung der Befestigungsplatten 10 ein verhältnismäßig dünnes Stahlblech verwendet werden, um eine ausreichende Elastizität für die Rastfedern 11 zu erhalten. Außerhalb der Rastfedern 11 kann die Befestigungsplatte 10 mit zur Hutschiene 20 hin abgekanteten Rändern 13 versehen sein, um eine ausreichende Stabilität für die Befestigungsplatte 10 zu erreichen.

## Patentansprüche

1. Vorrichtung zum Befestigen von Zusatzeinrichtung n, wie Kabelkanäle, Kleingehäuse, Montageplatten und dgl. an U-förmigen Hutschienen gemäß Norm DIN EN 50 022 (20) mit an den Seitenschenkeln (21, 23) nach außen abgekanteten Raststegen (22, 24) mit einer auf die Breite der Hutschienen (20) abgestimmten Befestigungsplatte (10) aus Stahlblech, bei welcher an der den Raststegen (22, 24) der Hutschiene (20) zugekehrten Seiten jeweils mindestens zwei Rastfedern (11) abgeteilt und abgebogen sind,
dadurch gekennzeichnet,
dass die Befestigungsplatte (10) mit Gewindebohrungen (14) versehen ist, von denen eine im Zentrum der Befestigungsplatte (10) angeordnet ist, und dass die Befestigungsplatte (10) außerhalb der Rastfedern (11) mit abgekanteten Rändern (13) versteift ist.

2. Vorrichtung nach Anspruch 1,
dadurch gekennzeichnet,
dass sich die Befestigungsplatte (10) über einen Abschnitt der Hutschiene (20) erstreckt, der mindestens der Breite der Hutschiene (20) entspricht.

3. Vorrichtung nach Anspruch 1 oder 2,
dadurch gekennzeichnet,
dass die Rastfedern (11) im wesentlichen S-förmig ausgebildet sind und mit Endabschnitten enden, deren konkave Seiten der Hutschiene (20) abgekehrt sind.

4. Vorrichtung nach einem der Ansprüche 1 bis 3,
dadurch gekennzeichnet,
dass die Rastfedern (11) mittels Schlitzen (12) an der Befestigungsplatte (10) abgeteilt sind, die sich über einen Teilbereich der Ränder der Befestigungsplatte (10) erstrecken.

5. Vorrichtung nach einem der Ansprüche 1 bis 4,
dadurch gekennzeichnet,
dass die Gewindebohrungen (14) gleichmäßig in der Befestigungsplatte (10) verteilt eingebracht sind.

6. Vorrichtung nach einem der Ansprüche 1 bis 5,
dadurch gekennzeichnet,
dass die um die zentrische Gewindebohrung (14) angeordneten Gewindebohrung (14) angeordneten Gewindebohrungen (14') im Durchmesser vom Durchmesser der zentrischen Gewindebohrung (14) abweicht und vorzugsweise kleiner sind.

## Claims

1. Apparatus for securing additional equipment, such as cable ducts, small housings, mounting plates and the like, to U-shaped top hat rails (according to DIN standard EN 50022) (20), said apparatus having locking ribs (22, 24), which are angled outwardly on the lateral arms (21, 23), and a securing plate (10), which is adapted to the width of the top hat rails (20) and is formed from sheet steel, wherein at least two locking springs (11) are divided and bent at each side facing the locking ribs (22, 24) of the top hat rail (20), characterised in that the securing plate (10) is provided with threaded bores (14), of which one is disposed in the centre of the securing plate (10), and in that the securing plate (10) is reinforced with angled edges (13) externally of the locking springs (11).

2. Apparatus according to claim 1, characterised in that the securing plate (10) extends over a portion of the top hat rail (20), which portion corresponds to at least the width of the top hat rail (20).

3. Apparatus according to claim 1 or 2, characterised in that the locking springs (11) have a substantially S-shaped configuration and terminate with end portions, the concave sides of which are remote from the top hat rail (20).

4. Apparatus according to one of claims 1 to 3, characterised in that the locking springs (11) are divided by means of slots (12) in the securing plate (10), which slots extend over a partial region of the edges of the securing plate (10).

5. Apparatus according to one of claims 1 to 4, characterised in that the threaded bores (14) are distributed uniformly in the securing plate (10).

6. Apparatus according to one of claims 1 to 5, characterised in that the threaded bores (14'), which are disposed around the central threaded bore (14), deviate in respect of the diameter from the diameter of the central threaded bore (14) and are preferably smaller.

## Revendications

1. Dispositif pour le montage d'accessoires, tels que des conduits pour câbles, des petits boîtiers, des plaques de montage et similaires sur des rails en forme de U renversé (20) suivant la norme DIN EN 50022, avec des nervures d'encliquetage (22, 24) coudées vers l'extérieur sur les ailes latérales (21, 23), avec une plaque de montage (10) en tôle d'acier harmonisée avec la largeur des rails en forme de U renversé, plaque de montage dont au moins deux ressorts d'encliquetage (11) sont formés par entaille et cintrage sur chacun des côtés faisant face aux nervures d'encliquetage (22, 24) du rail en forme de U renversé (20),
caractérisé
en ce que la plaque de montage (10) présente des forures filetées (14) dont l'une est disposée au centre de la plaque de montage (10), et en ce que la plaque de montage (10) est, en dehors des ressorts d'encliquetage (11), renforcée par des bords coudés (13).

2. Dispositif suivant la revendication 1,
caractérisé
en ce que la plaque de montage (10) s'étend au-dessus d'un tronçon du rail en forme de U renversé (20), qui correspond au moins à la largeur de ce rail (20).

3. Dispositif suivant la revendication 1 ou 2,
caractérisé en ce que les ressorts d'encliquetage (11) sont en substance en forme de S, et se terminent par des tronçons terminaux, dont les côtés concaves ne sont pas orientés vers le rail en forme de U renversé (20).

4. Dispositif suivant l'une quelconque des revendications de 1 à 3,
caractérisé
en ce que les ressorts d'encliquetage (11) sont réalisés par suite de la découpe de fentes (12) dans la plaque de montage (10), fentes qui s'étendent sur une zone partielle des bords de la plaque de montage (10).

5. Dispositif suivant l'une quelconque des revendications de 1 à 4,
caractérisé
en ce que les forures filetées (14) sont pratiquées à intervalles réguliers dans la plaque de montage (10).

6. Dispositif suivant l'une quelconque des revendications de 1 à 5,
caractérisé
en ce que les forures filetées (14') disposées autour de la forure filetée centrale (14) ont des diamètres différents de celui de la forure centrale (14) et ont des diamètres de préférence inférieurs.
